# EUROPEAN PATENT APPLICATION

(11) **EP 2 937 605 A1**
(43) Date of publication of application: **28.10.2015**
(21) Application number: 13864567.6
(22) Date of filing: 28.11.2013
(51) Int. Cl.: F16K 1/52, F16K 31/06

(54) **VALVE STRUCTURE**

(30) Priority: 21.12.2012 JP 2012279221
(71) Applicant: Eagle Industry Co., Ltd., Minato-ku Tokyo 105-8587 (JP)
(72) Inventor: OSAWA Yoshio, Tokyo 105-8587 (JP)
(74) Representative: TBK
(86) International application number: PCT/JP2013/082005
(87) International publication number: WO 2014/097843

(57) **Abstract**

In this valve structure, in a state in which a reciprocating member moves towards the seat surface, a valve body moves to the position where the valve unit sits on the valve seat, and with the movement of the reciprocating member in the direction away from the seat surface, the valve body moves in the direction in which the valve unit moves away from the valve seat. This valve structure is characterized in that a seal member that has a seal lip slidably contacting the surface of the valve body is provided, the valve body has a separating unit which, once the valve unit moves away from the valve seat, separates from the seal lip to form a gap between the valve body and the seal lip, and the separating unit is configured such that the amount of fluid passing through the gap between the valve body and the seal lip increases as the valve unit moves away from the valve seat.

## Description

### TECHNICAL FIELD

The present invention relates to a valve structure.

### BACKGROUND ART

Conventionally, solenoid valves have been widely used to control a flow rate and a fluid pressure corresponding to the flow rate. Some known solenoid valves use a linear solenoid configured such that the flow rate becomes proportional to an amount of current through a coil. A solenoid valve according to a conventional example using the linear solenoid is described by referring to Figs. 11 to 13. Fig. 11 is a schematic sectional view of a solenoid valve according to a conventional example in a state where a valve is closed in a portion around a valve section. Fig. 12 is a schematic sectional view of the conventional solenoid valve in a state where the valve is opened in the portion around the valve section. Fig. 13 is a graph showing a relationship between a flow rate and an amount of current through a coil of the conventional solenoid valve.

In the solenoid valve according to the conventional example, a valve body section 120 and a rod 100 are integrally formed. The rod 100 reciprocates in accordance with the amount of current through the coil. The valve body section 120 protrudes from the center of a distal end surface 110 of the rod 100 in a distal end direction. An O ring 300 made of rubber is mounted on an outer circumference of the valve body section 120. A valve seat 200 is provided with a valve hole 210.

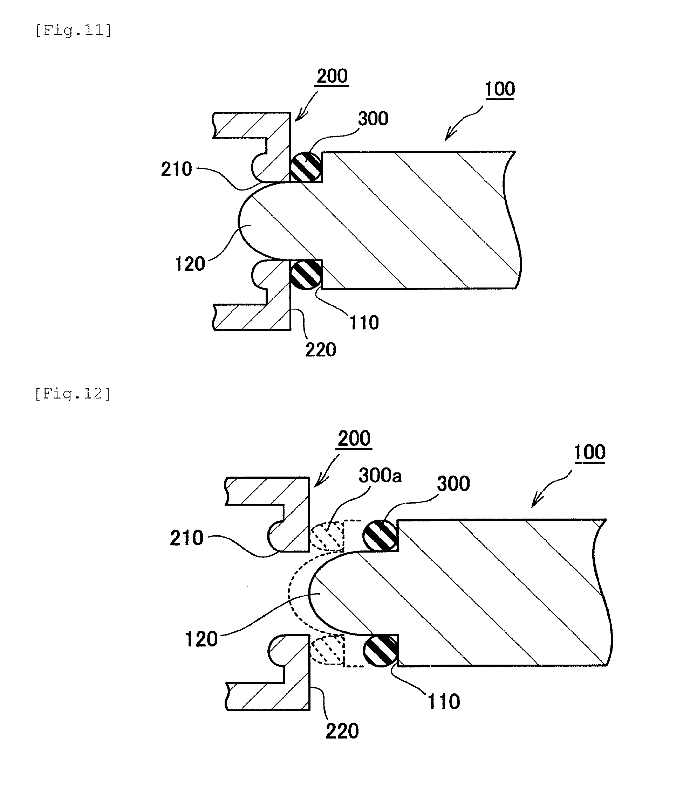

According to the configuration described above, in a state where no current is flowing through the coil, the valve body section 120 of the rod 100 is disposed in the valve hole 210 of the valve seat 200, and the O ring 300 is sandwiched between the distal end surface 110 of the rod 100 and a seat surface 220 of the valve seat 200. Thus, the valve hole 210 is closed by the valve body section 120 and the O ring 300 (see Fig. 11). When a current flows through the coil, the rod 100 moves in a direction in which the distal end surface 110 of the rod 100 moves away from the seat surface 220. As a result, the valve body section 120 is pulled out from the valve hole 210 and the O ring 300 is separated from the seat surface 220, whereby the valve hole 210 is opened (see Fig. 12).

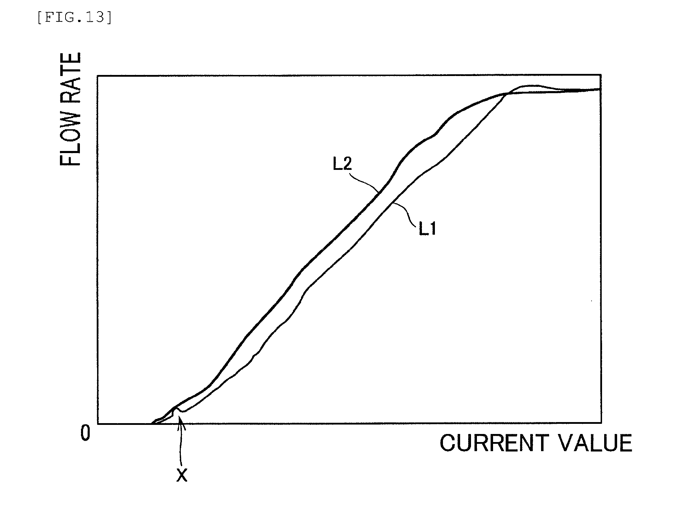

Here, the O ring 300 made of rubber has viscosity. In the conventional example described above, the O ring 300 is sandwiched by the distal end surface 110 of the rod 100 and the seat surface 220 of the valve seat 200. Thus, the O ring 300 is adhered to the seat surface 220 and deforms as follows. Specifically, the O ring 300 slightly expands in an axial direction right after the rod 100 starts to move from the state where the valve is closed, and then returns to the original shape upon being separated from the seat surface 220. An O ring 300a illustrated with a dotted line in Fig. 12, shows the state of being expanded in the axial direction due to the adhesion to the seat surface 220. Thus, as shown in a portion X in the graph of Fig. 13, the flow rate of a fluid temporarily increases right after the current starts to flow. In Fig. 13, L1 shows how a current value increases from a state where no current is flowing, and L2 shows how the current value reduces from a state where the current value is high to the state where no current is flowing. As shown in the graph, the flow rate is different between L1 and L2 with the same current value. This difference in flow rate is known as hysteresis. It can be understood that a larger hysteresis leads to a larger error of the flow rate with respect to a certain amount of current. One possible cause of the hysteresis is the problem due to the adhesion of the O ring 300 described above.

The adhesion of the O ring 300 to the seat surface 200 and the resultant unstable (random) deformation described above causes the following problems. Specifically, a flow rate control becomes unstable right after the current starts to flow (the valve starts to open), and furthermore, the hysteresis increases to make the flow rate control less accurate. In the above description, the problem of a valve structure in the solenoid valve is described. A similar problem might occur in a valve structure of a valve using a driving source (such as a pneumatic actuator, a hydraulic actuator, or a piezoelectric actuator) other than a solenoid.

[Patent Document 1] Japanese Patent Application Laid-open No. 2006-226352
[Patent Document 2] Japanese Examined Utility Model Application Publication No. H3-29645

### DISCLOSURE OF THE INVENTION

An object of the present invention is to provide a valve structure that achieves more accurate flow rate control.

The present invention has employed the following means for solving the problem.

Specifically, a valve structure includes:
a valve body disposed at a distal end of a reciprocating member configured to reciprocate by a reciprocation actuator; and
a valve seat having a valve hole that closes when a valve portion of the valve body is seated on a seat surface of the valve seat and that opens when the valve portion is separated from the seat surface,
the valve structure being configured such that, in a state where the reciprocating member moves toward the seat surface, the valve body moves to a position in which the valve portion is seated on the valve seat, and when the reciprocating member moves in a direction away from the seat surface, the valve body moves in a direction in which the valve portion is separated from the valve seat,
the valve structure further including a seal member including a seal lip that contacts a surface of the valve body in a slidable manner,
wherein the valve body includes a separation section that is separated from the seal lip so that a gap is formed between the valve body and the seal lip, after the valve portion is separated from the valve seat, and
the separation section is configured such that a flow rate of a fluid passing through the gap between the valve body and the seal lip increases as the valve portion moves away from the valve seat.

In the present invention, when the valve section of the valve body is seated on the valve seat, the seal lip of the seal member is in close contact with the surface of the valve body. Thus, a state is achieved where the seal lip and the valve section of the valve body work together to prevent the leakage of the fluid from the valve hole. Then, from the state where the valve is closed, the valve body moves in the direction in which the valve portion moves away from the valve seat. Thus, the fluid flows by passing between the seal lip and the valve body through the gap formed by the separation section formed on the valve body. The flow rate of the fluid passing through the gap increases as the valve section moves away from the valve seat.

The present invention uses the seal member including the seal lip that contacts the surface of the valve body in a slidable manner, as the member that works together with the valve portion to prevent leakage of a fluid through the valve hole. When the valve body moves from a valve closed position, the area on the side closer to the valve hole and the area opposite thereto across the seal lip can communicate with each other through the gap formed by the separation section of the valve body, whereby the pressure difference between the areas gradually decreases. Thus, in the present invention, the separation of the valve portion of the valve body is facilitated compared with a case of an O ring of a conventional example that is separated from a seat surface from a state of being compressed from both sides. Furthermore, in the present invention, the flow rate of the fluid passing through the gap by the separation section between the valve body and the seal lip increases as the valve portion moves away from the valve seat. All things considered, the fluid control can be stably performed right after the valve starts to open. Furthermore, the separation of the valve portion from the seat surface is facilitated, whereby the error in the flow rate control due to hysteresis can be reduced.

The separation section may be a tapered surface section formed in an area that faces the seal lip when the valve portion is separated from the valve seat, in a surface area in a range that faces the seal lip when the valve body reciprocates, and
the tapered surface section may have a diameter reducing as the valve portion moves away from the valve seat, to be separated from the seal lip.

Alternatively, the separation section may be a groove formed in an area on which the seal lip slides when the valve portion is separated from the valve seat, in a surface area in a range in which the seal lip slides when the valve body reciprocates, and
the groove may be configured such that a flow rate of a fluid passing through a portion of contact between the valve body and the seal lip increases as the valve portion moves away from the valve seat.

With the separation unit having the configuration described above, a stable fluid control can be achieved with a simple configuration.

As described above, the present invention can achieve more accurate flow rate control.

### BRIEF DESCRIPTION OF THE DRAWINGS

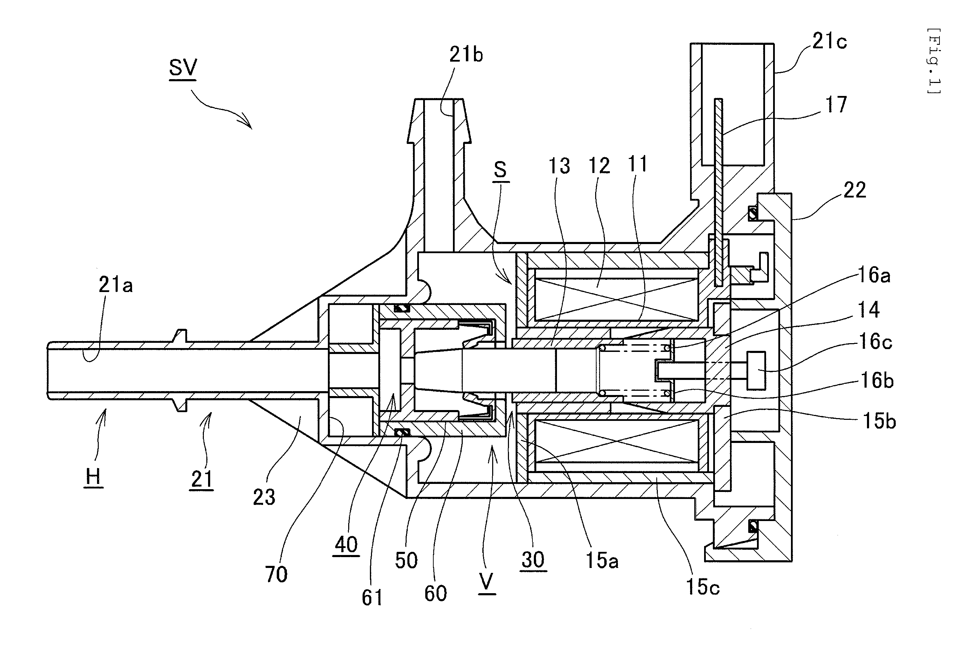

Fig. 1 is a schematic sectional view of a solenoid valve according to a first embodiment of the present invention.

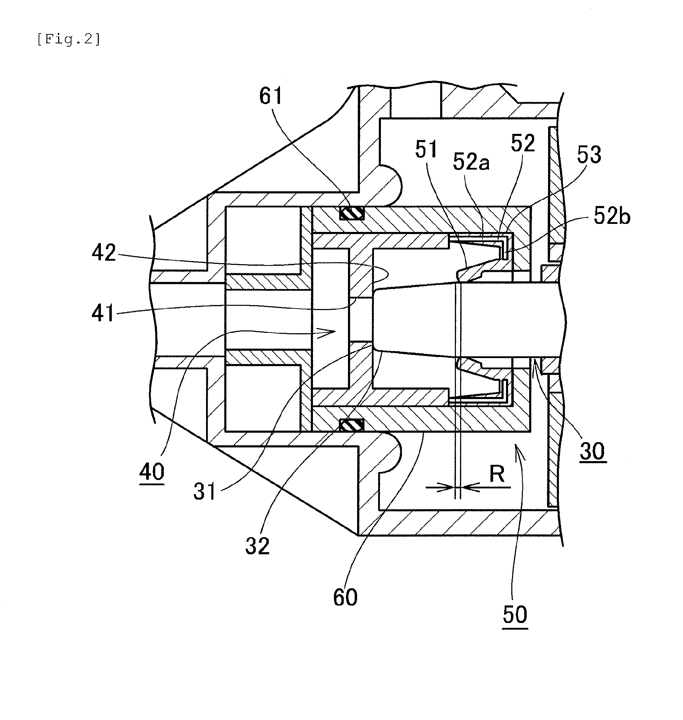

Fig. 2 is a schematic sectional view of a portion around a valve section in a state where a valve is closed, in the solenoid valve according to the first embodiment of the present invention.

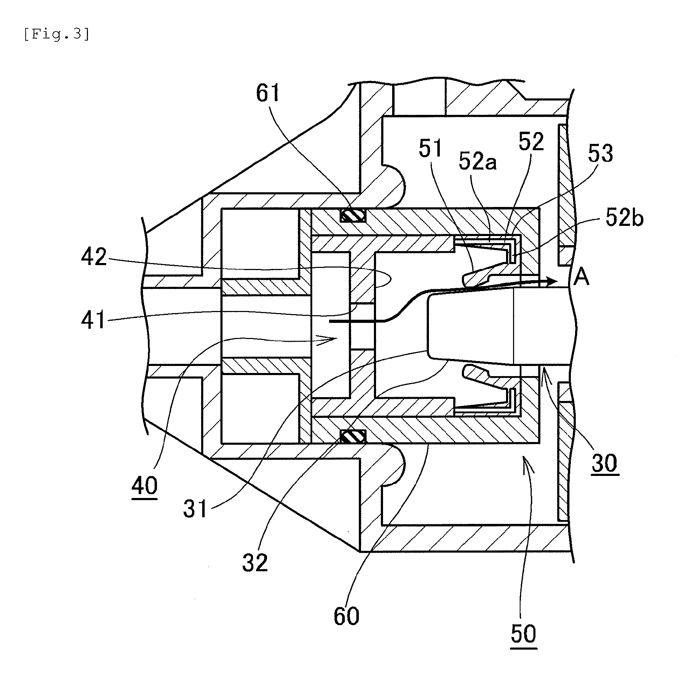

Fig. 3 is a schematic sectional view of the portion around the valve section in a state where the valve is opened, in the solenoid valve according to the first embodiment of the present invention.

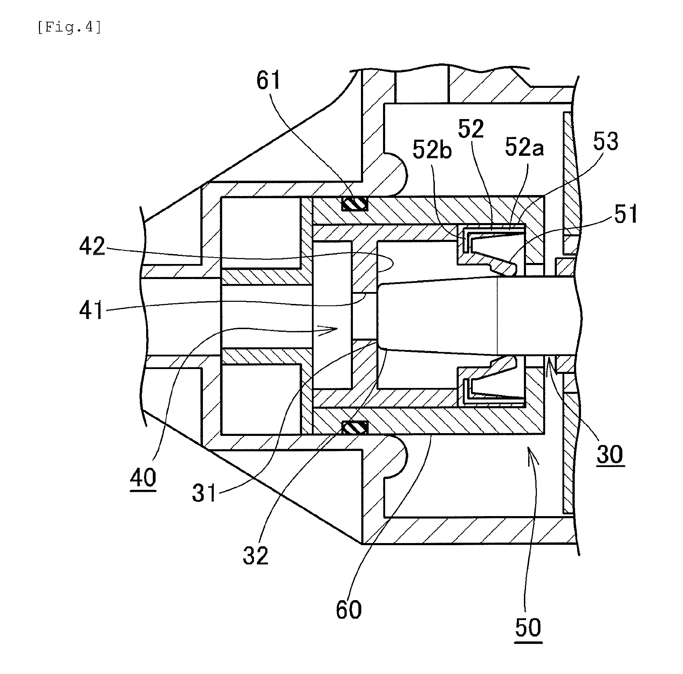

Fig. 4 is a schematic sectional view of a portion around a valve section in a state where a valve is closed, in the solenoid valve according to a second embodiment of the present invention.

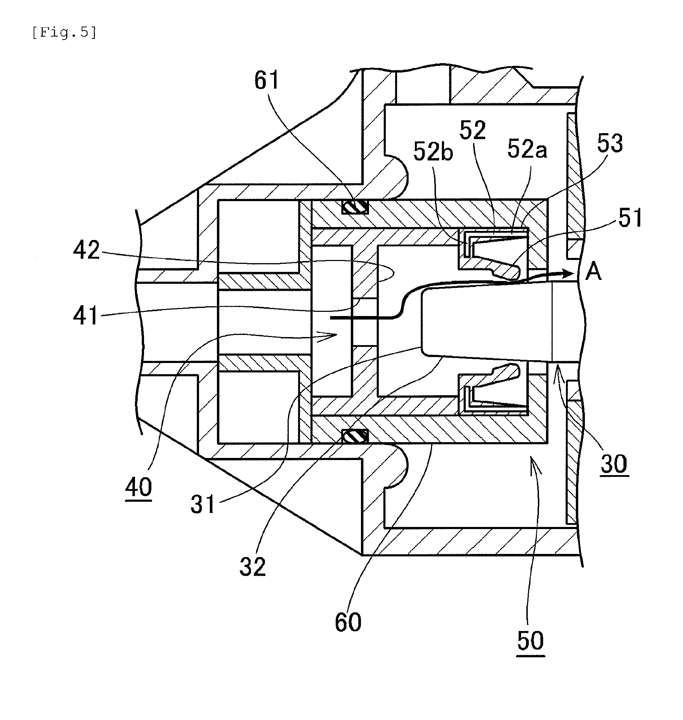

Fig. 5 is a schematic sectional view of the portion around the valve section in a state where the valve is opened, in the solenoid valve according to the second embodiment of the present invention.

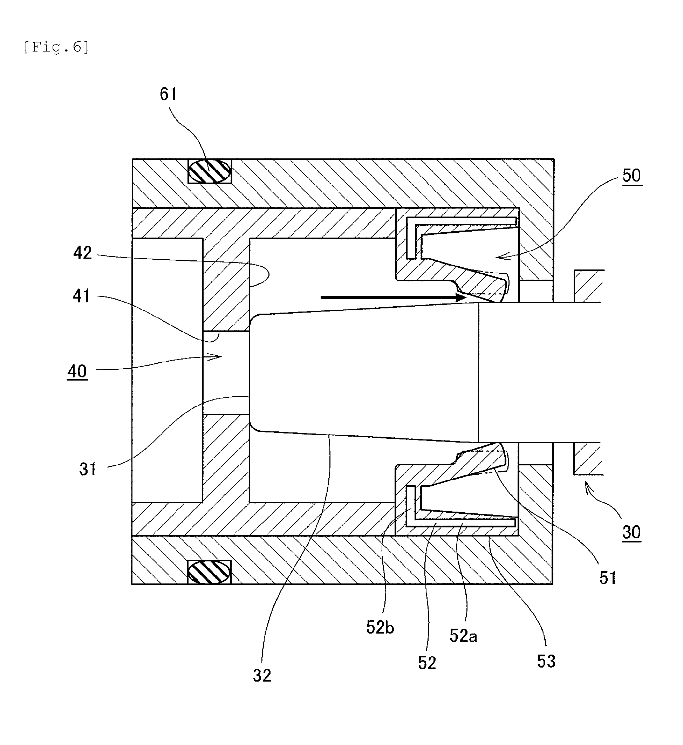

Fig. 6 is a schematic sectional view of the portion around the valve section in a state where the valve is closed, in the solenoid valve according to the second embodiment of the present invention.

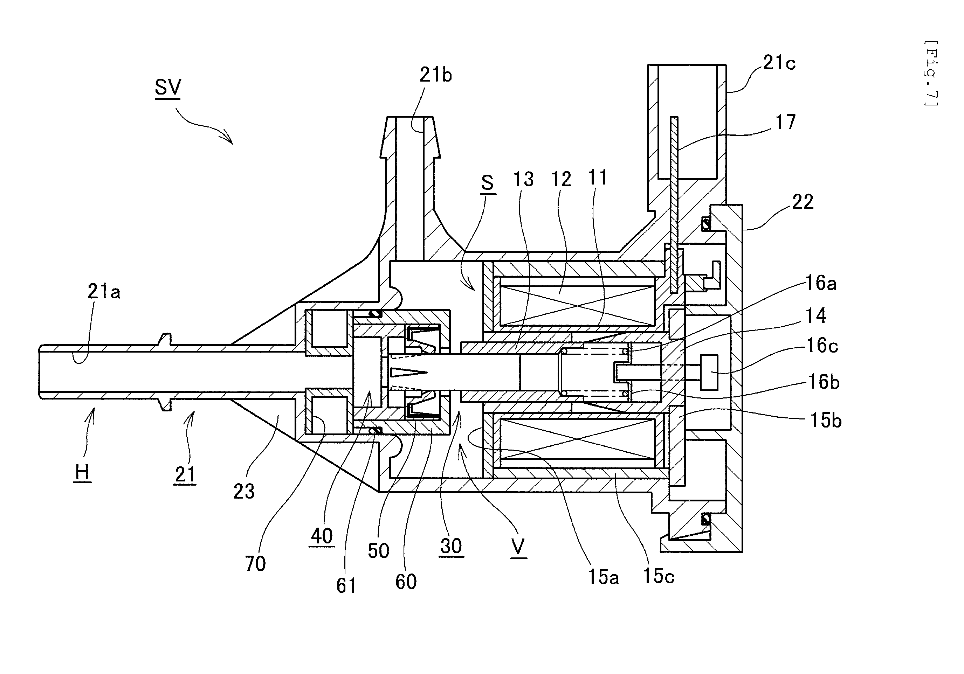

Fig. 7 is a schematic sectional view of a solenoid valve according to a third embodiment of the present invention.

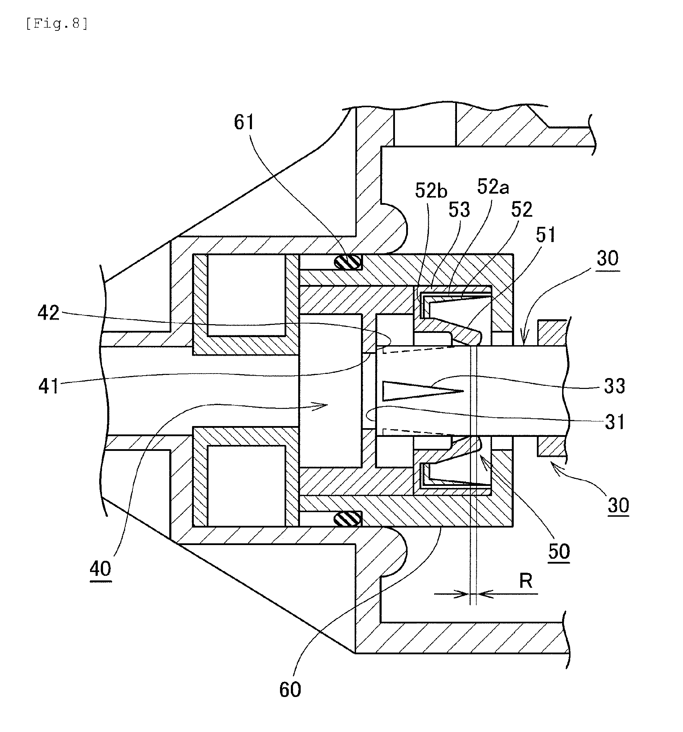

Fig. 8 is a schematic sectional view of a portion around a valve section in a state where a valve is closed, in the solenoid valve according to the third embodiment of the present invention.

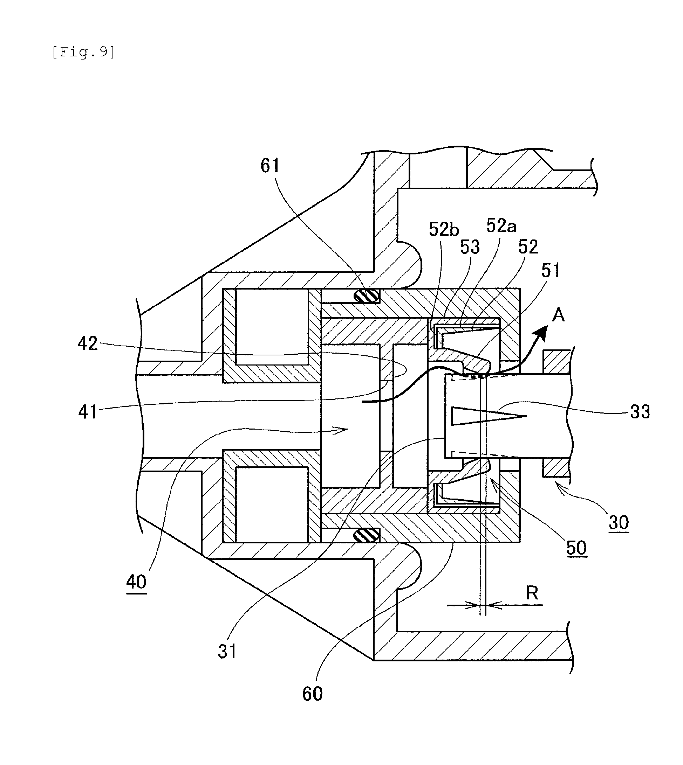

Fig. 9 is a schematic sectional view of the portion around the valve section in a state where the valve is opened, in the solenoid valve according to the third embodiment of the present invention.

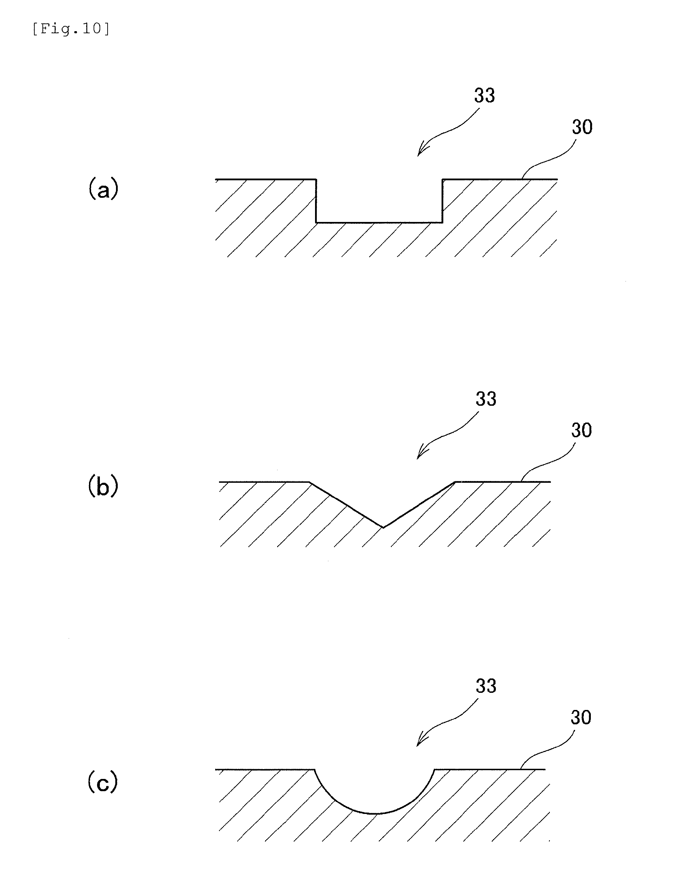

Fig. 10 is a diagram showing a sectional shape of a groove of a valve body in the solenoid valve according to the third embodiment of the present invention.
Fig. 11 is a schematic sectional view of a portion around a valve section in a state where a valve is closed, in the solenoid valve according to a conventional example.
Fig. 12 is a schematic sectional view of a portion around a valve section in a state where a valve is opened, in the solenoid valve according to the conventional example.
Fig. 13 is a graph showing a relationship between an amount of current through a coil and a flow rate, in the solenoid valve according to the conventional example.

### MODE FOR CARRYING OUT THE INVENTION

Modes for carrying out the invention will be exemplary described in detail based on embodiments, by referring to the drawings. There is no intension to limit the scope of present invention to the sizes, materials, shapes, and relative arrangement of components described in the embodiments, unless specifically noted. In the description below, a solenoid valve is described as an example of a device to which a valve structure is applied.

### (First embodiment)

A solenoid valve according to a first embodiment of the present invention is described by referring to Figs. 1 to 3.

### <Overall configuration of solenoid valve>

An overall configuration of the solenoid valve according to the embodiment of the present invention is described by referring to Fig. 1. A solenoid valve SV includes a solenoid section S as an actuator for reciprocation, a valve section V as a valve structure, and a housing section H accommodating various components of the solenoid section S and the valve section V.

The solenoid section S includes a bobbin 11, a coil 12, and a plunger 13. The coil 12 is wound around the bobbin 11 and generates a magnetic field when a current flows through the coil 12. The plunger 13 is a reciprocating member that is magnetically attracted to a center post 14 when a magnetic circuit is formed by the magnetic field generated by the coil 12. The solenoid section S further includes a pair of plates 15a and 15b and a casing 15c all made of a magnetic material, for forming the magnetic circuit described above. The solenoid section S further includes a spring 16a, a spring holder 16b, and an adjust screw 16c. The spring 16a biases the plunger 13 in a direction in which the plunger 13 moves away from the center post 14. The spring holder 16b holds the spring 16a. The adjust screw 16c adjusts the position of the spring holder 16b. The solenoid section S further includes a terminal 17 electrically connected to the coil 12.

The housing section H includes a housing main body 21, a cover 22, and a reinforcement member 23. The housing main body 21 accommodates the various components of the solenoid section S and the valve section V. The cover 22 is fixed to the housing main body 21. The reinforcement member 23 reinforces the housing main body 21. The housing main body 21 includes an input port section 21a, in which a fluid flows from a source pressure side, and an output port section 21b, through which the fluid is discharged to an output side (control pressure side). The housing main body 21 further includes a connector section 21c used for electrical connection to receive power supply from an outer power source.

The valve section V includes a valve body 30 and a valve seat 40. The valve body 30 is disposed at a distal end of the plunger 13. The valve is closed or opened when the valve body 30 is seated on or is separated from the valve seat 40. The valve section V further includes a seal member 50 that seals the fluid failed to be prevented from leaking by a valve portion of the valve body 30. The valve section V further includes an annular supporting member 60 that supports the valve seat 40 and the seal member 50. The valve section V further includes a seal ring 61 and a supporting member 70. The seal ring 61 seals a gap between an outer circumference surface of the supporting member 60 and an inner circumference surface of the housing main body 21. The supporting member 70 supports the valve seat 40 and the supporting member 60.

The adjust screw 16c adjusts the position of the spring holder 16b so that the flow rate (or a fluid pressure corresponding to the flow rate) is controlled as desired by a balance between a biasing force of the spring 16a described above and a magnetic force corresponding to the amount of current through the coil 12.

### <Valve section (valve structure)>

### «Configuration of valve section»

The configuration of the valve section V is described more in detail by mainly referring to Figs. 2 and 3. As described above, the valve section V includes the valve body 30, the valve seat 40, the seal member 50, and the supporting member 60.

The valve body 30 is a substantially column shaped member, and has one end fixed to the plunger 13 and an end surface on the other end serving as a valve portion 31. The valve body 30 reciprocates together with the plunger 13, when the current flows through the coil 12.

The valve seat 40 is an annular member, and is provided with a valve hole 41 (through hole) at the center. An end surface area, around the valve hole 41 and on the side of the plunger 13, serves as a seat surface 42 of the valve seat 40. A state where the valve hole 41 is closed (valve closed state) is achieved, when the valve portion 31 as the end surface of the valve body 30 comes into contact with the seat surface 42. The center axes of the valve body 30 and the valve hole 41 substantially match, and the valve body 30 has a larger diameter than the valve hole 41.

The seal member 50 is a member for sealing the fluid failed to be prevented from leaking by the valve portion 31 of the valve body 30, that is a fluid leaked out through a gap between the seated valve portion 31 and the valve seat 42. The seal member 50 includes a seal lip 51 that contacts an outer circumference surface of the valve body 30 in a slidable manner. The seal member 50 has substantially a configuration in which a rubber elastic body 53 is baked and thus is fixed on a metal ring 52 as an annular reinforcement member, and the outer circumference surface of the seal member is fitted in the inner surface of the supporting member 60. The reinforcement member may be any rigid member, and may be made of, for example, a material other than metal such as resin. The metal ring 52 includes a tubular section 52a and a flange section 52b and has a substantially L shaped semi-cross section. The flange section 52b extends radially inward from one end of the tubular section 52a. The seal lip 51 serves as a part of the rubber elastic body section 53, and protrudes from the distal end section of the flange section 52b in a direction, in which the valve body 30 moves toward the valve seat 40, while being bent radially inward with respect to the axial direction. The diameter of the distal end section of the seal lip 51 is set to be smaller than a diameter of the valve body 30 (the diameter of the contacted area in the valve closed state). Thus, an interface or interference margin is provided between the seal lip 51 and the valve body 30. The rubber elastic body section 53 may be made of a material such as, for example, polyurethane, nitrile butadiene rubber (NBR), hydrogenated nitrile butadiene rubber (HNBR), or fluorocarbon rubber (FKM). The configuration of the seal member 50 is not particularly limited, and thus the configuration described above is merely an example. Any other conventionally known seal for reciprocation may be used as appropriate.

The valve body 30 is provided with a tapered surface section 32 as a separation section, at a part of the outer circumference surface. The tapered surface section 32 is formed in an area, of the outer circumference surface of the valve body 30, that faces the seal lip 51 when the valve body 30 reciprocates, excluding an area that faces (is in contact with) the seal lip 51 when the valve portion 31 is seated on the valve seat 42. Specifically, the tapered surface section 32 is formed in an area that faces the seal lip 51 when the valve portion 31 is separated from the valve seat 42. The tapered surface section 32 is formed to have a tapered shape in which the diameter decreases toward the valve portion 31 at the distal end of the valve body 30.

### «Mechanism of valve section»

A mechanism of the valve section V is described by mainly referring to Figs. 2 and 3.

When no current is flowing through the coil 12 of the solenoid section S, no magnetic force is produced. Thus, the plunger 13 is moved away from the center post 14 by the biasing force from the spring 16a. Thus, as shown in Fig. 2, the valve portion 31 of the valve body 30 is seated on the seat surface 42 of the valve seat 40, whereby the valve is closed. Here, the seal lip 51 of the seal member 50 is in close contact with the outer circumference surface of the valve body 30, outside the area where the tapered surface section 32 is formed. Thus, as shown in Fig. 2, a strip shaped seal region R where the seal lip 51 is in contact with the entire outer circumference surface of the valve body 30 is formed. The seal range R is a portion of contact between. Thus, a flow path from the input port section 21a to the output port section 21b is blocked at two stages, that is, by the adhesion between the valve portion 31 and the seat surface 42 and by the seal region R formed by the seal member 50.

As the amount of current through the coil 12 of the solenoid section S increases, the magnetic attraction force increases. Thus, the plunger 13 moves toward the center post 14 against the biasing force from the spring 16a, whereby the valve body 30, disposed at the distal end of the plunger 13, also moves toward the center post 14. As a result, the valve portion 31 of the valve body 30 is separated from the seat surface 42 of the valve seat 40. The position of the seal region R, as the portion of contact between the valve body 30 and the seal lip 51, also moves from a seal position where the seal lip 51 contacts the entire circumference of the outer circumference surface of the valve body 30, to the area where the tapered surface section 32 is formed. Once the diameter of the tapered surface section 32 becomes smaller than an inner diameter of the seal lip 51, that is, once the interface or interference margin between the seal lip 51 and the tapered surface section 32 is lost, a gap is formed between the valve portion 31 and the seat surface 42. Thus, a flow path is formed that passes through the outer circumference surface side of the valve portion 31, and between the tapered surface section 32 and the seal lip 51, from the valve hole 41 (see the arrow A in Fig. 3). Thus, the fluid flowed in through the input port section 21a is discharged through the output port section 21b. The position of the valve body 30 disposed at the distal end of the plunger 13, and the resultant size of the gap between the valve portion 31 and the seat surface 42, are determined in accordance with the amount of current through the coil 12. Thus, the flow rate and the fluid pressure of the fluid discharged through the output port section 21b can be controlled by controlling the amount of current through the coil 12.

### (Second embodiment)

A solenoid valve according to a second embodiment of the present invention will be described by referring to Figs. 4 to 6. Here, the difference from the first embodiment will be mainly described. The components that are the same as the counterparts in the first embodiment will be denoted with the same reference signs and will not be described. Matters not particularly described in this embodiment are the same as the counterparts in the first embodiment.

The solenoid valve according to this embodiment has the following configuration. The seal member 50 is mounted on the supporting member 60 in an opposite direction from that in the first embodiment. Specifically, the seal lip 51 protrudes from the distal end of the flange section 52b in a direction in which the valve body 30 moves away from the valve seat 40, while being bent radially inward with respect to the axial direction.

As shown in Fig. 6, this embodiment provides a configuration of facilitating the separation of the seal lip 51 from the valve body 30 through deformation, by the pressure (source pressure) of the fluid flowing in through the input port section 21a. This deformed state is illustrated by the dashed line in Fig. 6. In a case of the solenoid valve with a high source pressure setting, the sealing property is of a great importance, and thus the configuration in the first embodiment, in which the seal lip 51 is bent toward a sealing fluid side, is preferable, while in a case of the solenoid valve with a low source pressure setting, the configuration of the second embodiment can be used. With the configuration of this embodiment, the discharges flow rate can be increased when desired by the deformation of the seal lip 51 in the low source pressure setting.

### (Third embodiment)

A solenoid valve according to a third embodiment of the present invention will be described by referring to Figs. 7 to 9. Here, the difference from the embodiments described above will be mainly described. The components that are the same as the counterparts in the embodiments described above will be denoted with the same reference signs and will not be described. Matters not particularly described in this embodiment are the same as the counterparts in the embodiments described above.

In this embodiment, grooves 33, as a separation section, are formed on the outer circumference surface of the valve body 30. The grooves 33 are formed in an area of the outer circumference surface of the valve body 30 where the seal lip 51 slides along with the reciprocation of the valve body 30, excluding an area in contact with the seal lip 51 when the valve portion 31 is seated on the valve seat 42. Specifically, the grooves 33 are formed in an area on which the seal lip 51 slides after the valve portion 31 is separated from the valve seat 42. The groove 33 extends on the outer circumference surface of the valve body 30, in a direction in which the valve body 30 reciprocates. The depth of the groove is the largest on the side of the valve portion 31, and is smaller at a portion farther from the valve portion 31. The groove 33 has a substantially isosceles triangular opening shape in the axial direction, and thus the groove width is the largest at the side of the valve portion 31, and reduces as it moves away from the valve portion 31.

When no current is flowing through the coil 12 of the solenoid section S, no magnetic force is produced. Thus, the plunger 13 is moved away from the center post 14 by the biasing force from the spring 16a. Thus, as shown in Fig. 8, the valve portion 31 of the valve body 30 is seated on the seat surface 42 of the valve seat 40, whereby the valve is closed. Here, the seal lip 51 of the seal member 50 is in close contact with the outer circumference surface of the valve body 30, outside the area where the groove 33 is formed. Thus, as shown in Fig. 8, the strip shaped seal region R is formed. The seal region R is a portion of contact between the seal lip 51 and the entire circumference of the outer circumference surface of the valve body 30. Thus, the flow path from the input port section 21a to the output port section 21b is blocked at two stages, that is, by the adhesion between the valve portion 31 and the seat surface 42 and by the seal region R formed by the seal member 50.

As the amount of current through the coil 12 of the solenoid section S increases, the magnetic attraction force increases. Thus, the plunger 13 moves toward the center post 14 against the biasing force from the spring 16a, whereby the valve body 30, disposed at the distal end of the plunger 13, also moves toward the center post 14. As a result, the valve portion 31 of the valve body 30 is separated from the seat surface 42 of the valve seat 40. The position of the seal region R, as a portion of contact between the valve body 30 and the seal lip 51, also moves from the seal position where the seal lip 51 contacts the entire circumference of the outer circumference surface of the valve body 30, to the area where the grooves 33 are formed. Thus, the gap is formed between the valve portion 31 and the seat surface 42, and a gap is further formed in the seal region R by the groove 33. Thus, a flow path is formed that passes through the outer circumference surface side of the valve portion 31, and between the groove 33 and the seal lip 51, from the valve hole 41 (see the arrow A in Fig. 9). Thus, the fluid flowed in through the input port section 21a is discharged through the output port section 21b.

### (Advantage of solenoid valve according to the embodiments)

In the solenoid valve SV according to the embodiments, the plunger 13 moves in the direction in which the valve portion 31 of the valve body 30 moves away from the seat surface 42 of the valve seat 40, when the current starts to flow through the coil 12 from the state where no current is flowing through the coil 12, and as the amount of current increases. In this process, the relative position between the valve body 30 and the seal member 50 changes, and also the position of the seal region R, as a portion of contact between the valve body 30 and the seal lip 51, also moves from the seal position where the seal lip 51 contacts the entire circumference of the outer circumference surface of the valve body 30, to the area where the tapered surface section 32 or the grooves 33 are formed (Fig. 2 to Fig. 3, Fig, 4 to Fig. 5, and Fig. 8 to Fig. 9).

The valve body 30 according to the embodiments employs the configuration of using the seal member 50, as a seal for reciprocation, to seal the fluid failed to be prevented from leaking by the valve portion 31 of the valve body 30 alone. The seal lip 51 of the seal member 50 contacts the outer circumference surface of the valve body 30 in a slidable manner. Thus, the seal lip 51 is not unstably deformed, unlike the O ring in the conventional example, and can exert the sealing function without hindering the movement of the valve body 30.

Furthermore, in the embodiments, when the valve body 30 moves from the closing position, the fluid flows between the seal lip 51 and the valve body 30 through the gap formed by the tapered surface section 32 of the valve body 30 or the grooves 33 formed on the surface of the valve body 30. The flow rate of the fluid passing through the gap increases as the valve portion 31 moves away from the valve seat 42. As described above, the area on the side closer to the valve hole 41 and the area opposite thereto across the seal lip 51 can communicate with each other through the tapered surface section 32 or the grooves 33. Thus, the pressure difference between the areas gradually reduces. Thus, the fluid control can be stably performed right after the current starts to flow (right after the valve starts to open). The separation of the valve portion 31 from the seat surface 42 is facilitated, whereby the error in the flow rate control due to hysteresis can be reduced. The O ring of the conventional example has the adhered state changing every time the plunger reciprocates, and thus causes the fluctuation of the fluid rate characteristics. Such a problem can be solved by the solenoid valve SV according to the embodiments, and thus the stable fluid rate characteristics can be achieved.

The solenoid valve SV according to the embodiments has the configuration of elastically supporting the side of the valve body 30 where the valve portion 31 is disposed, by the seal lip 51 of the seal member 50. Thus, the displacement of the center axis due to the reciprocation of the valve body 30 from the center axis of the valve seat 40 can be prevented. As a result, the accuracy of the seating position of the valve portion 31 of the valve body 30 on the seat surface 42 can be improved.

In the solenoid valve SV according to the third embodiment, as described above, the groove 33 has the sectional shape increasing as the valve portion 31 moves away from the valve seat 42. Thus, the area of the flow path, in which the fluid flows, gradually increases as the valve portion 31 moves away from the valve seat 42. In the third embodiment, the groove 33 has the following configuration. Specifically, as shown in Figs. 8 and 9, the depth changes along the center axis direction, and the opening has a substantially triangular shape (as viewed in a direction orthogonal to the center axis line). Thus, the flow path, through which the fluid flows, is not suddenly widened by the transition to the open valve state. By setting the shape, number, and arrangement of the grooves 33, linear change of the flow rate with respect to the amount of current through the coil 12 can be achieved, and the maximum flow rate can be adjusted. The groove 33 may have various configurations. As shown in Fig. 10, the sectional shape of the groove 33 may be a substantially rectangular shape with no change in the groove width in the depth direction (Fig. 10(a)), a substantially triangular shape with the groove width changing in the depth direction (Fig. 10(b)), a substantially semicircular shape (Fig. 10(c)), or the like. The opening shape of the groove 33 is not limited to the substantially triangular shape as shown in Figs. 8 and 9, and may be, for example, a substantially rectangular shape with no change in the groove width in the axial direction, a trapezoidal shape with a gently changing grove width, or the like. The number and the arrangement of the grooves 33 are not limited to those in Figs. 8 and 9, in which the four grooves 33 are arranged at an equal interval.

In the solenoid valve according to the third embodiment, the direction in which the seal member 50 is mounted on the supporting member 60, may be opposite to that in the configuration described above. Specifically, in the configuration described above, the seal lip 51 protrudes from the distal end section of the flange section 52b in the direction, in which the valve body 30 moves away from the valve seat 40, while being bent radially inward with respect to the axial direction, as shown in Figs. 7 to 9. Alternatively, the seal member 50 may be mounted on the supporting member 60 in the following manner. Specifically, the seal lip 51 may protrude from the distal end section of the flange section 52b in which the valve body 30 moves towards the valve seat 40, while being bent radially inward with respect to the axial direction.

In the solenoid valve SV according to the embodiment, the level of the bending (diameter reduction) and the formed range of the tapered surface section, the settings of the size and the number of the grooves 33, the configuration and the material of the seal member 50, the interface or interference margin between the seal lip 51 and the valve body 30, or the like may be set in such a manner that the flow rate with respect to a certain current value is less affected by the amount of the source pressure. Thus, even when the source pressure changes, the control pressure (pressure of the fluid discharged from the output port 21b) can be stabilized.

In the embodiments described above, the configuration where the valve body 30 is disposed at the distal end of the plunger 13 is described. Alternatively, the present invention is applicable to the configuration, in which the valve body is disposed at a distal end of the rod disposed on the plunger. The embodiments described above are described with a case where the valve structure is applied to the solenoid valve as an example. Alternatively, the valve structure is applicable to the valve structure other than that of the solenoid valve. Thus, the reciprocation actuator for reciprocating the reciprocating member is not limited to the solenoid. Alternatively, a pneumatic actuator, a hydraulic actuator, and a piezoelectric actuator may be used. The present invention is applicable to a valve structure, in which a valve body is disposed in the reciprocating member that reciprocates by the various reciprocation actuators.

### EXPLANATION OF REFERENCE NUMERALS

- 11: bobbin
- 12: coil
- 13: plunger
- 13a: fitting recess
- 14: center post
- 15a, 15b: plate
- 15c: casing
- 16a: spring
- 16c: adjust screw
- 17: terminal
- 21: housing main body
- 21a: input port section
- 21b: output port section
- 21c: connector section
- 22: cover
- 23: reinforcement member
- 30: valve body
- 31: valve portion
- 32: tapered surface section (separation section)
- 33: groove (separation section)
- 40: valve seat
- 41: valve hole
- 42: seat surface
- 50: seal member
- 51: seal lip
- 52: metal ring
- 53: rubber elastic body section
- 60: supporting member
- 61: seal ring
- 70: supporting member
- SV: solenoid valve
- H: housing section
- S: solenoid section
- V: valve section

## Claims

1. A valve structure comprising:
a valve body disposed at a distal end of a reciprocating member configured to reciprocate by a reciprocation actuator; and
a valve seat having a valve hole that closes when a valve portion of the valve body is seated on a seat surface of the valve seat and that opens when the valve portion is separated from the seat surface,
the valve structure being configured such that, in a state where the reciprocating member moves toward the seat surface, the valve body moves to a position in which the valve portion is seated on the valve seat, and when the reciprocating member moves in a direction away from the seat surface, the valve body moves in a direction in which the valve portion is separated from the valve seat,
the valve structure further comprising a seal member including a seal lip that contacts a surface of the valve body in a slidable manner,
wherein the valve body includes a separation section that is separated from the seal lip so that a gap is formed between the valve body and the seal lip, after the valve portion is separated from the valve seat, and
the separation section is configured such that a flow rate of a fluid passing through the gap between the valve body and the seal lip increases as the valve portion moves away from the valve seat.
